(19) Europäisches Patentamt
European Patent Office
Office européen des brevets

(11) Veröffentlichungsnummer: **0 019 704**
**A1**

# (12) EUROPÄISCHE PATENTANMELDUNG

(21) Anmeldenummer: **80101896.1**

(22) Anmeldetag: **09.04.80**

(51) Int. Cl.³: **C 02 F 1/52**, B 01 D 21/01, G 05 D 21/02

(30) Priorität: **09.04.79 DE 2914290**

(43) Veröffentlichungstag der Anmeldung: **10.12.80 Patentblatt 80/25**

(84) Benannte Vertragsstaaten: **DE FR GB IT SE**

(71) Anmelder: **Trommsdorf, Klaus-Uwe, Dr., Dipl.-Chem., Regina-Ullmann-Strasse 50, D-8000 München 81 (DE)**

(72) Erfinder: **Trommsdorf, Klaus-Uwe, Dr., Dipl.-Chem., Regina-Ullmann-Strasse 50, D-8000 München 81 (DE)**

(74) Vertreter: **Hartmann, Günter, Dr. Dipl.-Chem., St.-Anna-Strasse 15, D-8000 München 22 (DE)**

## (54) Verfahren und Vorrichtung zur kontrollierten chemischen Ausfällung von Fremdstoffen aus einer Flüssigkeit.

(57) Das Verfahren zur kontrollierten chemischen Ausfällung von Fremdstoffen aus einer Flüssigkeit, insbesondere Wasser, durch Zugabe eines chemischen Fällmittels, bei dem das chemische Fällmittel in Abhängigkeit von dem zuvor durch Konduktometrie ermittelten Leitfähigkeitsminimum der zu behandelnden Flüssigkeit dosiert wird, wird durchgeführt unter Verwendung einer Vorrichtung mit einem handelsüblichen Konduktometer, dem ein Probenentnahmegerät mit Vakuumpumpe vorgeschaltet ist und das zusammen mit diesem Probenentnahmegerät und einer mit Mikroprozessoren gesteuerten Elektronik eine integrale Einheit bildet. Das Konduktometer ist sowohl mit der Elektronik als auch mit einem Zulaufmengenmeßgerät für die zu behandelnde Flüssigkeit operativ verbunden, wobei die Elektronik ihrerseits mit einer nachgeschalteten üblichen Fällmittel-Dosiereinrichtung operativ verbunden ist. Das Verfahren ist betriebssicher, wartungsfreundlich und vielseitig anwendbar, insbesondere für Wasseraufbereitungen jeglicher Art.

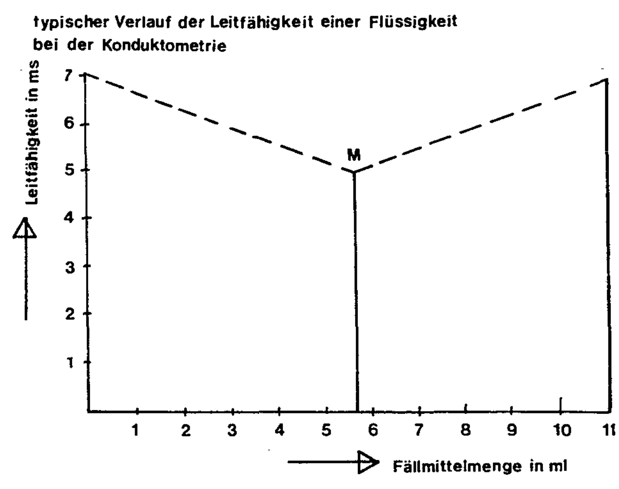


EP 0 019 704 A1

 0019704

## Beschreibung

BEZEICHNUNG
siehe Titelseite

Die Erfindung betrifft ein Verfahren und eine Vorrichtung zur kontrollierten chemischen Ausfällung von Fremdstoffen aus einer Flüssigkeit, insbesondere Wasser, durch Zugabe eines chemischen Fällungsmittels; sie betrifft insbesondere die Aufbereitung von Wasser durch chemische Fällung der darin enthaltenen fällbaren Anteile, bei dem man dem aufzubereitenden Wasser eine definierte Probe entnimmt, mittels Konduktometrie das Leitfähigkeitsminimum des Wassers während des Fällungsvorganges bestimmt und mittels einer nachgeschalteten Elektronik aus dem gemessenen Leitfähigkeitsminimum und der vorher bestimmten Wasserzuflußmenge unter Berücksichtigung eines Faktors, der von dem für die chemische Fällung verwendeten Fällungsmittel bzw. der verwendeten eingestellten Maßlösung abhängt, die dem aufzubereitenden Wasser zuzugebende Fällungsmitteldosis errechnet und eine nachgeschaltete Fällungsmitteldosiereinrichtung durch ein entsprechendes Signal steuert.

Die Erfindung wird nachfolgend an Hand der Aufbereitung von wäßrigen Flüssigkeiten bzw. Wasser näher erläutert, es ist jedoch selbstverständlich, daß sie auch auf alle anderen Verfahren angewendet werden kann, bei denen eine kontrollierte chemische Ausfällung von Fremdstoffen aus einer Flüssigkeit durch Zugabe eines chemischen Fällungsmittels angestrebt wird. Dabei umfaßt der hier verwendete Ausdruck "Wasseraufbereitung" sowohl die Trinkwasseraufbereitung als auch die Aufbereitung der verschiedensten Abwässer oder Schmutzwässer, in erster Linie der Kommunal- und Industrieabwässer, die auch als Abwasser-

0019704

reinigung bezeichnet wird.

Bekanntlich umfaßt die Wasseraufbereitung im vorgenannten Sinne mehrere Stufen, in deren Verlauf das aufzubereitende Wasser einer mechanischen Reinigung, einer chemischen Fällung und einer biologischen Behandlung unterzogen wird. Die hier beschriebene Erfindung befaßt sich mit Verbesserungen der Wasseraufbereitung in der Stufe der chemischen Fällung, in der die in dem aufzubereitenden Wasser enthaltenen unerwünschten fällbaren Bestandteile durch Zugabe eines chemischen Fällungsmittels unter Mitreißen von gegebenenfalls darin enthaltenen kolloidalen Schwebstoffen entfernt werden.

Die chemische Fällung ist eine bei der Wasseraufbereitung heute häufig angewendete Methode zur Entfernung der darin enthaltenen unerwünschten Bestandteile. Dabei werden ganz allgemein Inhaltsstoffe des behandelten Wassers aus dem Gleichgewicht entfernt, wie z.B. Phosphate, Sulfonate, Seifenmicellen, die eine nach außen negative Ladung tragen, und Schmutzteilchen, die bei der chemischen Fällung mitgerissen werden. Als Fällungsmittel dienen in der Regel Eisen-, Aluminium- und Calciumsalze, wie $FeCl_3$, $FeClSO_4$, $AlCl_3$, $Al_2(SO_4)_3$, Calciumsulfat und Calciumphosphate, sowie organische Polyelektrolyte verschiedener Provenienz, wie z.B. Polyacrylamide. In dem behandelten Wasser spielen sich dabei etwa die folgenden chemischen Reaktionen ab:

$$FeCl_3 + 3HOH \rightleftharpoons Fe(OH)_3\downarrow + 3HCl$$

$$3R\text{-}COONa + 3\ HCl \rightleftharpoons 3R\text{-}COOH\downarrow + 3NaCl$$

$$FeCl_3 + Na_3PO_4 \rightleftharpoons FePO_4\downarrow + 3NaCl$$

Da bei der Fällung der pH-Wert des behandelten Wassers von etwa 8 auf etwa 7 absinkt, treten die darin enthaltenen organischen Salze zu undissoziierten Säuren zusammen, die mit ausgefällt werden. Dadurch ist außer der Entfernung der unerwünschten Phosphate, die als hauptsächliche Ursache für die Eutrophierung stehender und fließender Gewässer angesehen wird, auch eine Verminderung der Werte für den chemischen Sauerstoffbedarf (CSB-Wert) und den biologischen Sauerstoffbedarf (BSB-Wert) möglich.

Die chemische Fällung dient bei der Abwasserbehandlung in erster Linie der Entlastung des biologischen Teils der häufig stark überlasteten Kläranlagen sowie einer weitgehenden Eliminierung des darin enthaltenen Phosphors, während sie bei der Trinkwasseraufbereitung einen von mehreren Reinigungsschritten im Wasserwerk darstellt.

Da Menge und Zusammensetzung der Fremdstoffe in dem aufzubereitenden Wasser, zum Teil beträchtlich, variieren, ist eine Kontrolle erforderlich, um jederzeit die optimale Fällungsmittelzugabe zu gewährleisten. Die richtige Fällungsmitteldosierung hat sich dabei als äußerst schwierig und bis heute praktisch ungelöst erwiesen. Bisher wurden zur Lösung dieses Problems verschiedene Methoden angewandt, die von der reinen Handdosierung bis zur Steuerung nach sogenannten Ganglinien, die für jedes behandelte Wasser vorher empirisch bestimmt werden müssen, reichen. Da bei diesen Methoden verhältnismäßig viel Zeit vergeht von der

Probenentnahme bis zur fertigen Analyse und der entsprechenden Dosierung des Fällungsmittels, während der sich die Beschaffenheit des behandelten Wassers längst geändert haben kann, haben diese Methoden periodische Über- oder Unterdosierungen zur Folge. Das ist auch dann der Fall, wenn die Fällungsmitteldosierung entsprechend dem Phosphatgehalt des behandelten Wassers durchgeführt wird. Ein weiterer Nachteil dieser Methoden ist der, daß zu ihrer Durchführung hochqualifiziertes Personal erforderlich ist, das nicht überall zur Verfügung steht und zudem die Wasseraufbereitung verteuert.

Es wurde auch bereits die Bestimmung der Leitfähigkeit des zu behandelnden Wassers als Methode zur Steuerung der Dosierung des Fällungsmittels in Betracht gezogen, da festgestellt wurde, daß die Leitfähigkeit im Bereich kommunaler Kläranlagen bis zu einem gewissen Grade mit der Verschmutzung des darin behandelten Abwassers korreliert. Der Nachteil dieser Methode besteht jedoch darin, daß die oben genannte Korrelation für jedes behandelte Abwasser einzeln bestimmt und durch eine Näherungsgleichung beschrieben werden muß.

Der letzte Stand der technischen Entwicklung auf diesem Gebiet ist der, Fällungs- bzw. Flockungsmittel dem zu behandelnden Wasser zuzusetzen, die dabei auftretende Änderung der Trübung des behandelten Wassers mittels eines Photometers zu messen und die Dosierung des Fällungs- bzw. Flockungsmittels in Abhängigkeit von der gemessenen Trübungsdifferenz zu steuern (vgl. die DE-AS 27 04 816). Die dafür bisher verwendeten Apparaturen sind jedoch außerordentlich aufwendig, in ihren mechanischen Teilen äußerst

empfindlich und bedürfen einer ständigen Wartung. Die in diesen Apparaturen verwendeten sogenannten Mohnopumpen sind außerordentlich störanfällig, da häufig Verstopfungen auftreten und die Pumpen einer starken Korrosion unterliegen. Hinzu kommt, daß diese Methode für die Trinkwasseraufbereitung nicht angewendet werden kann, da die dabei auftretenden Trübungsdifferenzen für quantitative Messungen zu gering sind.

Aufgabe der Erfindung war es daher, ein Verfahren und eine Vorrichtung zur kontrollierten chemischen Ausfällung von Fremdstoffen aus einer Flüssigkeit, insbesondere Wasser, zu entwickeln, mit deren Hilfe es möglich ist, die vorstehend geschilderten Nachteile zu vermeiden, die insbesondere sowohl auf die Aufbereitung von Trinkwasser als auch auf die Behandlung von Abwasser anwendbar sind, eine optimale Betriebssicherheit und Wartungsfreundlichkeit bieten und eine hohe Anpassungsfähigkeit der Dosiermenge des Fällungsmittels auch im Falle einer sich rasch ändernden Zusammensetzung der behandelten Flüssigkeit gewährleisten.

Es wurde nun gefunden, daß diese Aufgabe erfindungsgemäß dadurch gelöst werden kann, daß man zur Bestimmung der jeweils erforderlichen Dosierung des chemischen Fällungsmittels das Leitfähigkeitsminimum der zu behandelnden Flüssigkeit, insbesondere des zu behandelnden Wassers unter Verwendung eines oder mehrerer Konduktometer mißt, mittels einer mit dem Konduktometer verbundenen Elektronik aus dem dabei gemessenen Wert, der vorher bestimmten Durchflußmenge der behandelten Flüssigkeit bzw. des behandelten Wassers pro Zeiteinheit und unter Berücksichtigung eines Faktors, der von dem für die chemische Fällung jeweils

verwendeten Fällungsmittel bzw. der verwendeten eingestellten Maßlösung abhängt, die der behandelten Flüssigkeit bzw. dem behandelten Wasser zuzugebende Fällungsmittelmenge errechnet und eine nachgeschaltete Fällungsmitteldosiereinrichtung durch ein von der Elektronik auf diese aufgegebenes entsprechendes Signal steuert.

Gegenstand der Erfindung ist ein Verfahren zur kontrollierten chemischen Ausfällung von Fremdstoffen aus einer Flüssigkeit, insbesondere Wasser, durch Zugabe eines chemischen Fällungsmittels, das dadurch gekennzeichnet ist, daß man die Dosierung des chemischen Fällungsmittels in Abhängigkeit von dem zuvor mittels Konduktometrie ermittelten Leitfähigkeitsminimum der zu behandelnden Flüssigkeit durchführt.

Nach dem beanspruchten Verfahren ist es möglich, das Fällungsmittel, das für die Wasseraufbereitung jeglicher Art erforderlich ist, in kurzen Zeitabständen mit einer solchen Genauigkeit zu dosieren, daß auch bei einem aufzubereitenden Wasser mit einem Gehalt an gelösten Stoffen, der innerhalb der Zeiteinheit stark schwankt, eine Unter- und Überdosierung weitgehend vermieden werden kann. Das erfindungsgemäße Verfahren bietet eine optimale Betriebssicherheit und Wartungsfreundlichkeit, ist vielseitig anwendbar und technisch einfach durchführbar, so daß zu seiner Durchführung kein hochqualifiziertes Personal erforderlich ist.

Gemäß einer bevorzugten Ausgestaltung der Erfindung lassen sich durch Verwendung von mehreren Konduktometern, die über eine Weiche in Serie hintereinander geschaltet sind, die Zeitabstände bei

0019704

der Bestimmung des Leitfähigkeitsminimums der zu behandelnden Flüssigkeit noch weiter verkürzen von beispielsweise etwa 10 Minuten bei Verwendung eines Konduktometers auf etwa 2,5 Minuten bei Verwendung von 4 Konduktometern.

Bei der Durchführung des erfindungsgemäßen Verfahrens ist es ferner gemäß einer weiteren bevorzugten Ausgestaltung auf technisch einfache Weise möglich, die verschiedensten chemischen Fällungsmittel und die verschiedensten eingestellten Maßlösungen zu verwenden, da es lediglich erforderlich ist, einen entsprechenden Korrekturfaktor in die Elektronik einzugeben, der bei der Abgabe des Dosiersignals dann automatisch berücksichtigt wird.

Bei einer weiteren bevorzugten Ausgestaltung des erfindungsgemäßen Verfahrens kann die zum Einsatz kommende Vakuumpumpe, die dem Probenentnahmegerät vorgeschaltet ist, von der Saugseite zur Druckseite umgeschaltet werden, so daß vor jeder Probenentnahme die Entnahmeleitung freigespült wird, wodurch Verstopfungen zuverlässig vermieden werden. Die erfindungsgemäß verwendete Vakuumpumpe bietet ferner den Vorteil, daß sie mit dem aufbereiteten Wasser selbst nicht in Berührung kommt und somit nicht vom Zusetzen bedroht ist und auch der korrosiven Einwirkung der aufbereiteten Flüssigkeit nicht ausgesetzt ist. Die erfindungsgemäß verwendete Anordnung eignet sich sowohl für die Vor- als auch Simultan- als auch Nachfällung und zum Gebrauch in Wasserwerken.

Gegenstand der Erfindung ist ferner eine Vorrichtung zur Durchführung des vorstehend beschriebenen Verfahrens, die gekennzeichnet ist durch ein handelsübliches Konduktometer, dem ein Probenentnahmegerät mit Vakuumpumpe vorgeschaltet ist und das zusammen mit diesem vorgeschalteten Probenentnahmegerät und einer mit Mikroprozessoren gesteuerten Elektronik eine integrale Einheit bildet, wobei das Konduktometer sowohl mit der Elektronik als auch mit einem Zulaufmengenmeßgerät für die aufzubereitende Flüssigkeit operativ verbunden ist, wobei die Elektronik ihrerseits mit einer nachgeschalteten üblichen Fällmitteldosiereinrichtung verbunden ist.

Die Einzelbestandteile der zur Durchführung des erfindungsgemäßen Verfahrens verwendeten Einheit sind an sich bekannt und stellen Handelsprodukte dar, die auf anderen Gebieten, wenn auch nicht in dieser Zusammenstellung, seit langem eingesetzt werden. Dies gilt sowohl für die Probenentnahmevorrichtung als auch für das Konduktometer als auch die durch Mikroprozessoren gesteuerte Elektronik-Einheit. Auch die der erfindungsgemäß verwendeten Einheit nachgeschaltete Fällmitteldosiereinrichtung ist an sich bekannt und im Handel erhältlich. Neu ist jedoch, daß erfindungsgemäß als Basiswert für die Steuerung der Fällmitteldosiereinrichtung das mittels eines oder mehrerer Konduktometer bestimmte Leitfähigkeitsminimum verwendet wird, das zusammen mit anderen Faktoren, nämlich der gemessenen Durchflußmenge der zu behandelnden Flüssigkeit pro Zeiteinheit und fällmittelabhängigen Faktoren, zur Grundlage der Steuerung der Fällmitteldosiereinrichtung gemacht wird.

Bei der praktischen Durchführung des erfindungsgemäßen Verfahrens bläst ein handelsübliches Probenentnahmegerät, das entweder zulaufmengenabhängig oder zeitabhängig gesteuert werden kann, zunächst die Entnahmeleitung frei (durch Umschaltung der zugeordneten Vakuumpumpe von der Saugseite zur Druckseite) und entnimmt dann mittels der Vakuumpumpe (nach erneuter Umschaltung derselben)einen definierten Teilstrom aus dem Zulauf beispielsweise einer Kläranlage oder eines Wasserwerkes und drückt diesen in einen Behälter, der einen sich automatisch öffnenden Ablaß aufweist, der sich nach Durchführung der Analyse automatisch öffnet und die analysierte Proben ins Freie leitet. Dieser Behälter ist vorzugsweise mit einem Flügelrührer versehen, welcher der Umwälzung der darin enthaltenen Lösung dient. Außerdem enthält der Behälter die Elektroden, die mit einem Konduktometer operativ verbunden sind. Der Behälter ist normalerweise verschlossen und besitzt eine Belüftungseinrichtung.

Das Konduktometer zeichnet den Verlauf der Leitfähigkeit entsprechend der Fig. 1 der beiliegenden Zeichnung auf und gibt dieses Signal auf eine durch Mikroprozessoren gesteuerte Elektronik. Diese speichert das Signal und errechnet die Lage des Minimums der Leitfähigkeit. Der dabei erhaltene Wert in mS steht nach der Umrechnung in mA in direkter Beziehung zu der Menge in ml, die mittels der Fällmitteldosiereinrichtung dem zu behandelnden Wasser zugegeben werden muß. Durch ein entsprechendes Signal, das von der Elektronik auf die Fällmitteldosiereinrichtung aufgegeben wird, ist es möglich, die errechnete Dosiermittelmenge der behandelten Flüssigkeit zuzusetzen. Das Konduktometer kann dabei sowohl mit einer eingestellten Maßlösung als auch mit einem üblichen Fällungsmittel betrieben werden, wobei im ersteren Falle in die Elektronik ein geeigneter Umrechnungsfaktor eingegeben werden muß (diese Methode führt zu besonders genauen Ergebnissen). Das von der Elektronik errechnete Signal gibt direkt die Fällmittelmenge in ppm an, die pro $m^3$ Wasser benötigt werden, um die gewünschte quantitative Fällung durchzuführen. In diese Berechnung geht außerdem noch der Wert der

Zulaufmengenmessung der Kläranlage ein, wobei in diesem Falle die Elektronik ein Signal in mA abgibt. Aus diesen Signalen errechnet die Elektronik das zur jeweiligen Zulaufmenge gehörende Fällmittelmengensignal, das entweder auf die Fällmittelpumpe oder den Schieber eines Hochbehälters aufgegeben wird.

Nach Beendigung der Analyse der entnommenen Probe wird diese automatisch abgelassen und der Vorgang beginnt von neuem.

Ein Vorteil dieser Verfahrensweise ist der, daß mehrere Konduktometer hintereinandergeschaltet werden können, die von einem einzigen Probeentnahmegerät über eine Weiche bedient werden können. Auf diese Weise kann je nach Wunsch die Signalfolge verkürzt werden. Dabei tritt die zum Einsatz kommende Vakuumpumpe mit dem behandelten Abwasser selbst nicht in Berührung, so daß sie weder verstopfen noch korrodieren kann, wie dies bei den bisher verwendeten Mohnopumpen häufig der Fall war.

An ein Probenentnahmegerät können nach dem bisherigen Stand der Technik mehrere Konduktometer angeschlossen werden, wodurch die Zeitabstände der durchgeführten Messungen von 10 Minuten bis auf 2,5 Minuten verkürzt werden können. Dadurch kann auch starken Schwankungen der Zusammensetzung des behandelten Abwassers Rechnung getragen und im Rahmen eines kontinuierlich oder diskontinuierlich durchführbaren Verfahrens stets eine optimale Ausfällung erzielt werden.

Bei dem erfindungsgemäß verwendbaren Zulaufmengenmeßschreiber handelt es sich um einen üblichen Venturi-Meßschreiber, wie er im

Handel erhältlich ist. Das von diesem ermittelte Mengensignal wird auf die Elektronik aufgegeben, die aus diesem Signal und dem von dem Konduktometer aufgegebenen Signal das der gesamten Zulaufmenge zugehörige Fällmittelmengensignal errechnet.

Ein weiterer Vorteil des erfindungsgemäßen Verfahrens ist der, daß es technisch sehr einfach durchführbar ist und sehr vielseitig anwendbar ist, weil auch bei Verwendung verschiedener Fällmittel bzw. eingestellter Maßlösungen der entsprechende Faktor auf sehr einfache Weise von Hand in die Elektronikeinheit eingegeben werden kann, ohne daß dafür ein besonders hochqualifiziertes Personal erforderlich ist.

Die Erfindung wird in den Fig. 1 und 2 der beiliegenden Zeichnung näher erläutert. Dabei zeigen:

Die Fig. 1 den Verlauf der Leitfähigkeit einer Flüssigkeit (z.B. Wasser) in mS in Abhängigkeit von der Fällmittelmenge in ml bei der Bestimmung der Leitfähigkeit der Flüssigkeit durch Konduktometrie. Die sich dabei ergebende Leitfähigkeitskurve ist durch eine sprunghafte Richtungsänderung beim Leitfähigkeitsminimum M charakterisiert;

die Fig. 2 ein Fließdiagramm, welches die Durchführung des erfindungsgemäßen Verfahrens in schematischer Form erläutert, das insbesondere eine mögliche Anordnung der erfindungsgemäß verwendeten Steuereinheit zeigt, die besteht aus dem Probenentnahmegerät mit Vakuumpumpe, zwei Konduktometern, zwei zugehörigen Meßgefäßen, die durch eine Weiche miteinander verbunden sind und der Elektronikeinheit.

— - —

1 Probeentnahmegerät mit Vakuumpumpe
2 Flügelrührer
3 automatischer Ablaß
4 automatische Bürette
5 Elektroden
6 Weiche
7 Elektronikeinheit
8 Wechselstromquelle
9 Signal zur Fällmitteldosiereinheit
10 Signal von Konduktometer
11 Signal von Venturigerät

DR. RER. NAT. GUNTER HARTMANN
PATENTANWALT



0019704

8 MÜNCHEN 22 · ~~THIERSCHSTRASSE 8~~ · ~~TELEFON (08 11) 29 55 62~~ · TELEGRAMME: HARPAT MÜNCHEN

Patentanwalt Dr. G. Hartmann · 8 München 22 · ~~Thierschstraße 8~~

**Neue Anschrift**
Dr. G. Hartmann
Patentanwalt
St.-Anna-Str. 15 - Tel. 089/220331
8000 München 22

Ihr Zeichen | Mein Zeichen | Datum 9. 4. 1979

Anmelder: Dipl.-Chem. Dr. Klaus-Uwe Trommsdorff
Regina-Ullmann-Straße 50
8000 München 81

Verfahren und Vorrichtung zur kontrollierten chemischen Ausfällung von Fremdstoffen aus einer Flüssigkeit

## Patentansprüche

1. Verfahren zur kontrollierten chemischen Ausfällung von Fremdstoffen aus einer Flüssigkeit, insbesondere Wasser, durch Zugabe eines chemischen Fällungsmittels, dadurch gekennzeichnet, daß man die Dosierung des chemischen Fällungsmittels in Abhängigkeit von dem zuvor durch Konduktometrie ermittelten Leitfähigkeitsminimum der zu behandelnden Flüssigkeit durchführt.

2. Verfahren nach Anspruch 1, dadurch gekennzeichnet, daß man zur Bestimmung des Leitfähigkeitsminimums der zu behandelnden Flüssigkeit

ein Konduktometer mit vorgeschalteter Vakuumpumpe und vorgeschaltetem Probenentnahmegerät verwendet, das mit einer Elektronik operativ verbunden ist, die aus der aufgegebenen Flüssigkeits-Durchflußmenge und dem gemessenen Leitfähigkeitsminimum der Flüssigkeit die der Flüssigkeit zuzugebende Fällmittelmenge errechnet und durch Aufgabe eines entsprechenden Signals die nachgeschaltete Dosiereinrichtung steuert.

3. Verfahren nach Anspruch 1 oder 2, dadurch gekennzeichnet, daß man zur Bestimmung des Leitfähigkeitsminimums der zu behandelnden Flüssigkeit in kurzen Zeitabständen mehrere Konduktometer über eine Weiche in Serie hintereinanderschaltet.

4. Verfahren nach einem der Ansprüche 1 bis 3, dadurch gekennzeichnet, daß man in die Elektronik einen Faktor eingibt entsprechend dem jeweils verwendeten chemischen Fällungsmittel bzw. der jeweils verwendeten eingestellten Maßlösung.

5. Verfahren nach einem der Ansprüche 1 bis 4, dadurch gekennzeichnet, daß man durch Umschalten der Vakuumpumpe von der Saugseite zur Druckseite vor jeder Probenentnahme die Entnahmeleitung freispült.

6. Vorrichtung zur Durchführung des Verfahrens nach einem der Ansprüche 1 bis 5, gekennzeichnet durch ein handelsübliches Konduktometer, dem ein Probenentnahmegerät mit Vakuumpumpe vorgeschaltet ist und das zusammen mit diesem vorgeschalteten Probenentnahmegerät und einer mit Mikroprozessoren gesteuerten Elektronik eine integrale Einheit bildet, wobei das Konduktometer sowohl

mit der Elektronik als auch mit einem Zulaufmengenmeßgerät (Venturigerät) für die aufzubereitende Flüssigkeit operativ verbunden ist, und wobei die Elektronik ihrerseits mit einer nachgeschalteten üblichen Fällmittel-Dosiereinrichtung verbunden ist.

0019704

1/2

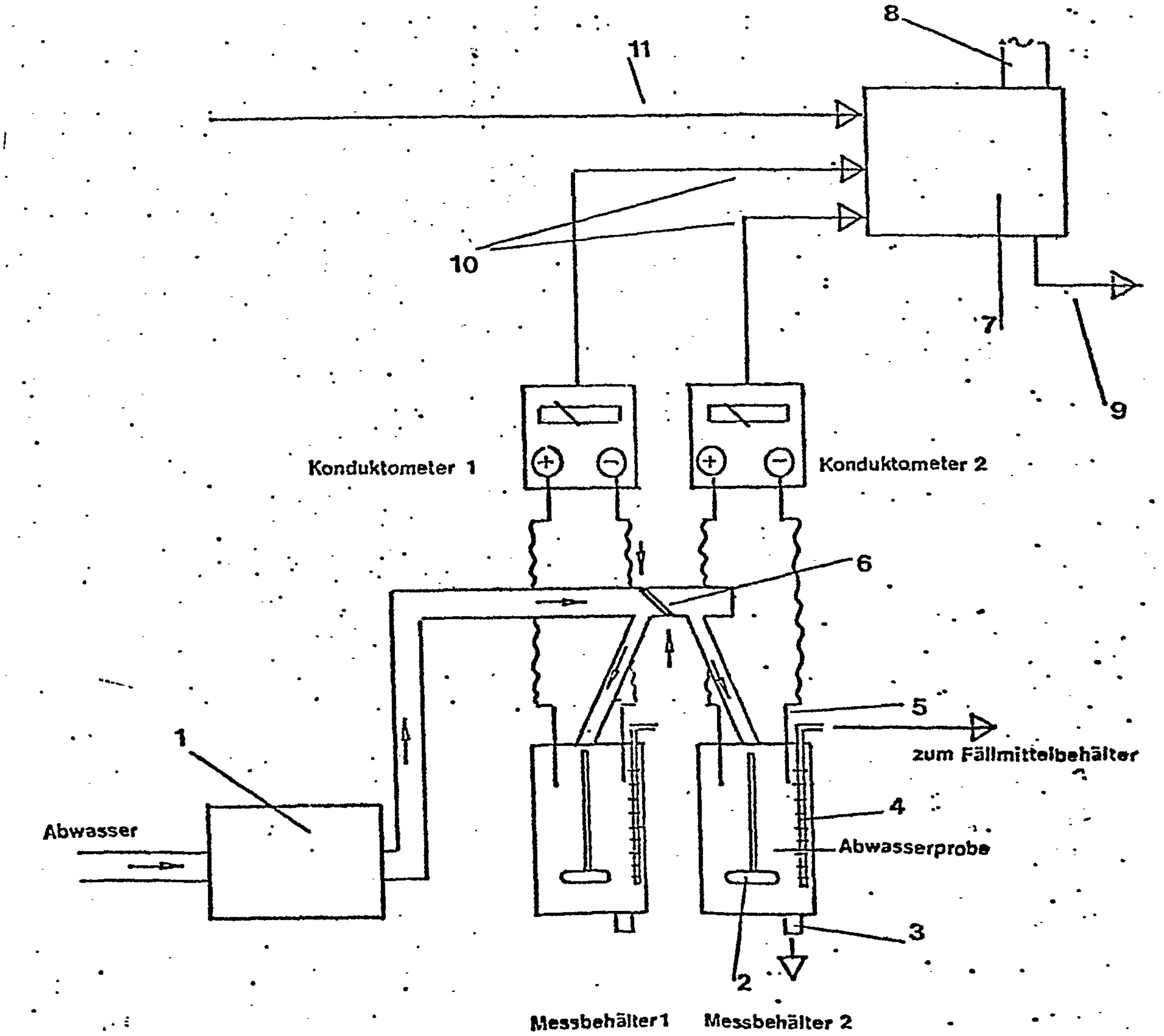


Fig. 2

0019704

2/2

typischer Verlauf der Leitfähigkeit einer Flüssigkeit
bei der Konduktometrie

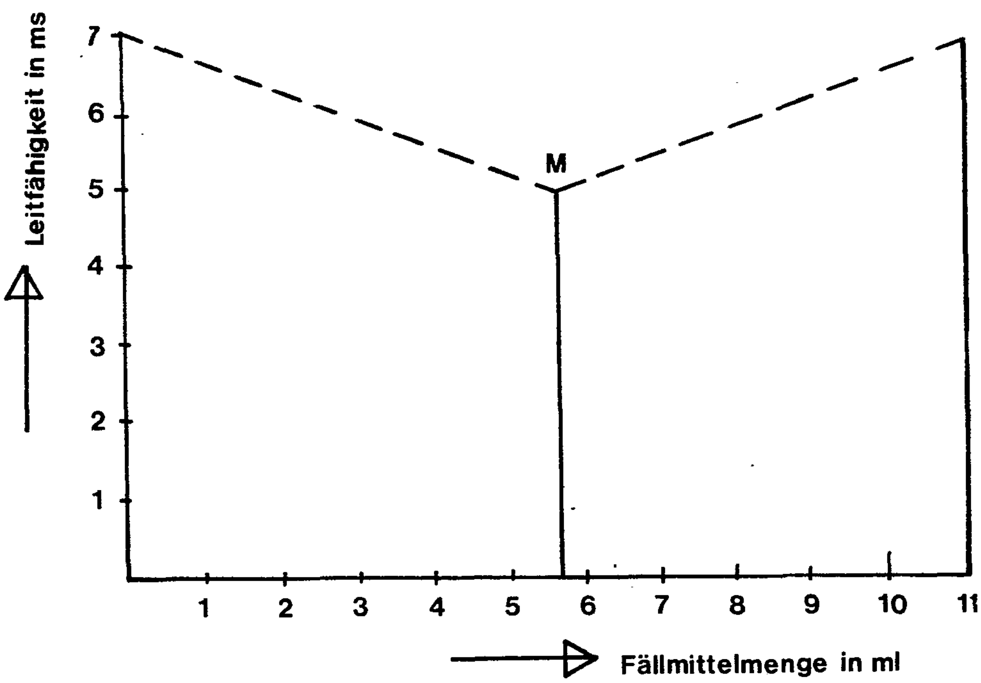

0019704

Europäisches Patentamt

**EUROPÄISCHER RECHERCHENBERICHT**

Nummer der Anmeldung

EP 80 10 1896

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| X | AU - A - 453 977 (WESTINGHOUSE)<br>* Vollständig *<br>-- | 1-6 | C 02 F 1/52<br>B 01 D 21/01<br>G 05 D 21/02 |
| | DE - B - 1 265 071 (E. ASENDORF)<br>* Vollständig *<br>-- | 1 | |
| A | GB - A - 720 161 (LONDON COUNTY COUNCIL) | | |
| A | GB - A - 1 133 773 (MAGYAR OPTIKAI MUVEK) | | **RECHERCHIERTE SACHGEBIETE (Int. Cl. 3)** |
| A | US - A - 3 214 964 (H.F. DAVIS)<br>---- | | C 02 F 1/52<br>B 01 D 21/00<br>21/01<br>C 02 F 1/66<br>1/00<br>G 05 D 21/02<br>G 01 N 27/56 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 18-07-1980 | V. AKOLEYEN |